# EUROPÄISCHE PATENTSCHRIFT

(11) **EP 2 377 405 B1**
(45) Veröffentlichungstag und Bekanntmachung des Hinweises auf die Patenterteilung: **05.06.2013**
(21) Anmeldenummer: 10159735.9
(22) Anmeldetag: 13.04.2010
(51) Int. Cl.: A22C 11/02

(54) **Vorrichtung und Verfahren zum Herstellen und Abfüllen von Feinbrät, insbesondere einer Emulsion**
Device and method for producing and filling fine sausage meat, in particular an emulsion
Dispositif et procédé de fabrication et de remplissage de chair à saucisse, notamment d'une émulsion

(43) Veröffentlichungstag der Anmeldung: 19.10.2011
(73) Patentinhaber: Albert Handtmann Maschinenfabrik GmbH & Co. KG, 88400 Biberach (DE)
(72) Erfinder: Baechtle, Manfred, 88433, Schemmerhofen (DE); Braig, Wolfgang, 88471, Obersulmetingen (DE); Reutter, Siegfried, 88436, Eberhardzell (DE); Mueller, Gerhard, 88433, Schemmerhofen (DE)
(74) Vertreter: Grünecker, Kinkeldey, Stockmair & Schwanhäusser

(56) Entgegenhaltungen:
- US-A- 5 953 984

## Beschreibung

Die Erfindung betrifft eine Vorrichtung und ein Verfahren zum Herstellen und Abfüllen von Feinbrät, insbesondere einer Emulsion.

Traditionell erfolgt die Feinbrätherstellung in mehreren aufeinanderfolgenden Schritten in verschiedenen Maschinen. Die Produktion ist dabei in der Regel in folgende Verarbeitungsschritte gegliedert: Vorzerkleinerung - Mischen - Feinzerkleinerung - Füllen mit Vakuumfüller. Das heißt, dass das Füllgut zunächst vorzerkleinert und gemischt wird und anschließend diese Masse dann weiter zerkleinert wird, um das Feinbrät zu erzeugen. Bei der Feinzerkleinerung werden häufig sogenannte Schüsselkutter verwendet. Anstatt des Schüsselkutters können auch sogenannte Feinzerkleinerer verwendet werden. Das fertig hergestellte Feinbrät wird dann in den Trichter einer Füllmaschine gefüllt, um anschließend z. B. in Wursthüllen abgefüllt zu werden. Der bisherige Produktionsprozess ist jedoch kompliziert und es sind mehrere unabhängige Einzelvorrichtungen notwendig.

In der DE 101 52 323 wurde bereits beschrieben, an eine Füllmaschine eine Zerkleinerungsmaschine anzuschließen, damit die Füllmaschine nicht nur zum Füllen, sondern auch als Zuführeinrichtung verwendet werden kann. Hier ist die Zerkleinerungsmaschine hinter der Füllmaschine angeordnet. Zum Füllen muss diese abgekoppelt werden. Das zerkleinerte Produkt wird dann aufgefangen und daraufhin wieder in den Trichter einer Füllmaschine geschüttet. Auch diese Anordnung ermöglicht kein kontinuierliches Verfahren. Das Füllgut ist darüber hinaus während der Produktion immer wieder offen der Umgebung ausgesetzt.

Das Dokument US 5 953 984 A offenbart eine Vorrichtung zum Herstellen und Abfüllen von Feinbrät, insbesondere einer Emulsion mit einer Zuführeinrichtung für Füllgut, einer Förderpumpe zum Fördern des Füllguts in Form eines einstellbaren und konstanten Füllgutstroms, mindestens einen nachgeschalteten Feinzerkleinerer, sowie einer dem Feinzerkleinerer nachgeschalteten Füll- bzw. Portioniereinrichtung , insbesondere einem Füllrohr, zum Abfüllen des erzeugten Feinbräts bzw. der Emulsion wobei nach der Förderpumpe ein Grobzerkleinerer zum Zerkleinern des über die Förderpumpe zugeführten Füllguts angeordnet wird, dem der mindestens eine Feinzerkleinerer nachgeschaltet ist.

Hiervon ausgehend liegt der vorliegenden Erfindung die Aufgabe zugrunde, eine Vorrichtung und ein Verfahren bereitzustellen, die einen vereinfachten kontinuierlichen Verarbeitungsprozess zum Herstellen und Abfüllen von Feinbrät ermöglichen.

Diese Aufgabe wird durch die Merkmale der Ansprüche 1 und 9 gelöst.

Gemäß der vorliegenden Erfindung ist also zwischen Füll- bzw. Portioniereinrichtung und Förderpumpe zumindest ein Feinzerkleinerer angeordnet. Somit ist es möglich, in nur einer Vorrichtung Feinbrät, insbesondere Emulsion, zwischen Förderpumpe und Füll- bzw. Portioniereinrichtung herzustellen und dann unmittelbar danach abzufüllen. Unter Füll- oder Portioniereinrichtung versteht man eine Einrichtung die das Füllgut entweder nur abfüllen kann oder aber abfüllen und auch portionieren, dass bedeutet in Einzelportionen unterteilen kann. Die Füll- bzw. Portioniereinrichtung kann also entweder ausschließlich ein Füllrohr sein oder aber eine Anordnung, die ein Füllrohr und eine Portioniereinrichtung z.B. eine Abdreheinheit oder eine Clipmaschine umfasst, so dass unterteilte Würste hergestellt werden können.

Somit kann ein kontinuierlicher Verarbeitungsprozess gewährleistet werden, der Zeit und somit Produktionskosten und darüber hinaus auch Energie spart. Es ergibt sich eine verbesserte Hygiene im Gesamtprozess durch kurze Verarbeitungszeiten und keine Verweildauer des offenen Füllguts im Verarbeitungsbetrieb. Unter Feinzerkleinerer versteht man einen Zerkleinerer, der das Füllgut so stark zerkleinert, dass es eine kleinere Körnung als z.B. in einem Grobzerkleinerer aufweist und nach der letzten Zerkleinerungsstufe die Konsistenz von Feinbrät hat bzw. eine Emulsion ist.

Dadurch, dass das Füllgut in Form eines einstellbaren und konstanten Füllgutstroms von der Förderpumpe gefördert wird ist die Vorrichtung geeignet Würste aus Feinbrät mit hoher Portioniergenauigkeit in nur einer Vorrichtung herzustellen.

Gemäß der Erfindung sind zwischen Füll- bzw. Portioniereinrichtung und Förderpumpe zumindest zwei Zerkleinerungsstufen, d. h. hier in Form eines Grobzerkleinerers und mindestens eines Feinzerkleinerers angeordnet. Somit ist es möglich, in nur einer Vorrichtung Feinbrät, insbesondere Emulsion auch aus gröberen Fleischstücken zwischen Förderpumpe und Füll- bzw. Portioniereinrichtung herzustellen und dann unmittelbar danach abzufüllen. Somit kann auch für gröbere Fleischstücke, die einen Durchmesser von > 15 mm, insbesondere > 20 mm aufweisen, ein kontinuierlicher Verarbeitungsprozess gewährleistet werden, der Zeit und somit Produktionskosten und darüber hinaus auch Energie spart. Die Körnung des Füllguts nach dem Grobzerkleinerer liegt etwa bei >2 bis 4 mm. Es ergibt sich auch bei dieser Ausführungsform eine verbesserte Hygiene im Gesamtprozess durch kurze Verarbeitungszeiten und keine Verweildauer des offenen Füllguts im Verarbeitungsbetrieb. Dadurch, dass das Füllgut in zumindest zwei Zerkleinerungsstufen verarbeitet wird, kann dieses als Feinbrät oder Emulsion einfach, ohne große Druckverluste ausgestoßen werden. Ein wesentlicher Vorteil liegt auch darin, dass sowohl für die Grobzerkleinerung, als auch die Feinzerkleinerung nur eine einzige Förderpumpe notwendig ist.

Der Grobzerkleinerer und der Feinzerkleinerer weisen jeweils mehrere Zerkleinerungswerkzeuge auf, von denen zumindest jeweils eines rotiert. Die Zerkleinerungswerkzeuge in den jeweiligen Zerkleinerungsstufen arbeiten beispielsweise nach dem Zerkleinerungsprinzipien Roter - Stator, Messer - Lochscheibe, Lochscheibe - Lochscheibe, sowie eine Kombination dieser Zerkleinerungsprinzipien. Dabei sind die Drehzahlen der Zerkleinerungswerkzeuge einstellbar. Somit kann für jedes Produkt und jede Körnung in jeder Zerkleinerungsstufe die optimale Drehzahl eingestellt werden.

Gemäß einer besonderen Ausführungsform weist die Vorrichtung eine Steuereinrichtung auf, die einen Antrieb des mindestens einen Zerkleinerungswerkzeugs des Feinzerkleinerers so ansteuert, dass die Drehzahl n > 500 U/min beträgt. Somit kann mit dem Feinzerkleinerer das Füllgut ausreichend feinzerkleinert werden, um Feinbrät herzustellen.

Es ist vorteilhaft, wenn die Vorrichtung eine zentrale Steuerung aufweist, die einen Antrieb der Förderpumpe, des Grobzerkleinerers und des mindestens einen Feinzerkleinerers regelt. Gibt es mehrere Feinzerkleinerer so können auch deren Antriebe von der zentralen Steuerung geregelt werden. Somit können die Drehzahlen der einzelnen Zerkleinerungsstufen aufeinander abgestimmt werden und auch auf die Füllleistung der Förderpumpe, d. h. dem Volumenstrom eingestellt werden. Darüber hinaus kann auch die Leistung der Förderpumpe entsprechend auf eine bestimmte Füllmenge pro Zeiteinheit eingestellt werden, so dass Druckverluste in den jeweiligen Zerkleinerungsstufen kompensiert werden können.

Förderpumpe, der Grobzerkleinerer und der mindestens eine nachgeschaltete Feinzerkleinerer weisen jeweils einen eigenen Antriebsmotor auf. Somit kann in den verschiedenen Stufen und auch für die Förderpumpe eine optimale Drehzahl eingestellt werden. Dies ermöglicht eine sehr große Flexibilität, da dann die Zusammensetzung der Schneidsätze, d. h. die unterschiedlichen Zerkleinerungswerkzeuge in den unterschiedlichen Zerkleinerungsstufen frei gewählt werden können und nicht aneinander angepasst werden müssen. Es wäre auch möglich, bestimmte Antriebe miteinander zu koppeln, so dass sich definierte, fest eingestellte Drehzahlverhältnisse ergeben. Die Drehzahlen müssen dann aber aufeinander abgestimmt werden und die Schneidsätze aneinander angepasst werden.

Es ist besonders vorteilhaft, wenn zwischen dem Grobzerkleinerer und dem nachgeschalteten Feinzerkleinerer eine Zuführeinrichtung zum Zuführen von Zusatzstoffen vorgesehen ist und/oder zwischen dem Feinzerkleinerer und einem weiteren Feinzerkleinerer eine entsprechende Zufuhreinrichtung angeordnet ist. Dabei können beispielsweise Wasser oder Eiswasser zugeführt werden. Ein solches Zufügen weiterer Bestandteile ist für bestimmte Füllmassen erforderlich. Dadurch, dass nach der Zuführeinrichtung zum Zuführen von Zusatzstoffen noch eine weitere Zerkleinerungsstufe vorgesehen ist, kann sicher gestellt werden, dass diese zusätzlichen Bestandteile gut mit dem Füllgut vermischt werden können.

Es ist besonders vorteilhaft, wenn die Vorrichtung eine Kühlung aufweist, die das Füllgut in der Vorrichtung zumindest abschnittsweise kühlt. Das Füllgut kann beispielsweise in einem Bereich der Zerkleinerungsstufen und/oder den Verbindungsleitungen gekühlt werden.

Erfindungsgemäß sind also die Förderpumpe und mindestens ein Feinzerkleinerer und die nachgeschaltete Füll- bzw. Portioniereinrichtung oder die Förderpumpe, der Grobzerkleinerer, der mindestens eine Feinzerkleinerer und die nachgeschaltete Füll- bzw. Portioniereinrichtung fest über eine Verrohrung miteinander verbunden und bilden eine Einheit. Es ergibt sich ein geschlossenes System. Unter geschlossenem System versteht man hier, dass von der Füllpumpe bis zum Auslass der Füll- bzw. Portioniereinrichtung das Füllgut nicht mit der Außenatmosphäre in Verbindung kommt, was besonders produktschonend und hygienisch ist.

Es ist vorteilhaft, wenn die Zerkleinerungswerkzeuge in den Zerkleinerern, insbesondere als austauschbarer Schneidsatz, angeordnet sind. Dies bietet eine größtmögliche Flexibilität. Der Zerkleinerungsgrad kann damit ideal angepasst werden.

Bei dem erfindungsgemäßen Verfahren werden also alle Herstellungsschritte zum Herstellen und Abfüllen von Feinbrät bzw. einer Emulsion in einer Vorrichtung durchgeführt. Dabei wird das Füllgut mindestens einer Zerkleinerungsstufe zugeführt, bevor es z. B. über ein Füllrohr abgefüllt werden kann. Es ist vorteilhaft, wenn vor der Feinzerkleinerung das Füllgut in einer ersten Zerkleinerungsstufe aus der Förderpumpe einem Grobzerkleinerer zugeführt wird und im Grobzerkleinerer vorzerkleinert wird, bevor es in einer zweiten Zerkleinerungsstufe feinzerkleinert wird.

Wie bereits erwähnt kann zwischen einzelnen Zerkleinerungsstufen ein Zusatz zugeführt werden.

Vorteilhafterweise kann die Drehzahl mindestens eines rotierenden Zerkleinerungswerkzeugs einer Zerkleinerungsstufe in Abhängigkeit von mindestens einem der folgenden Parameter eingestellt bzw. geregelt werden: Förderleistung der Förderpumpe, Art des Produkts, Zerkleinerungsgrad, d. h. gewünschter Zerkleinerungsgrad nach der Zerkleinerungsstufe, Art des Zerkleinerungswerkzeugs.

Somit kann eine ideale Produktqualität gewährleistet werden. Vorteilhafterweise werden die Drehzahlen des Antriebs der Förderpumpe und der rotierenden Zerkleinerungswerkzeuge in den unterschiedlichen Zerkleinerungsstufen von einer zentralen Steuerung gesteuert. Somit können die unterschiedlichen Betriebsparameter einfach aufeinander abgestimmt werden.

Die Drehzahl des mindestens einen rotierenden Zerkleinerungswerkzeugs in der ersten Zerkleinerungsstufe ist kleiner als in der oder den nachfolgenden Stufe(n) und beträgt zur Grobzerkleinerung insbesondere n ≤ 500 U/min. Die Drehzahlen in der oder den nachfolgenden Stufe(n) betragen n > 500 U/min.

Das Füllgut wird den Zerkleinerungsstufen unter Druck zugeführt, der von der Förderpumpe erzeugt wird. Zusätzliche Fördereinrichtungen sind nicht notwendig.

Es ist besonders vorteilhaft, wenn in der ersten und zweiten Zerkleinerungsstufe Hartteile, wie beispielsweise Sehnen, Flexen, Schwarten, Knochensplitter, Bindegewebe, oder fleischfremde Bestandteile, wie Metallteile, Clips, etc., durch eine Separiereinrichtung abgetrennt werden.

Der Feinzerkleinerer wird so betrieben, dass die Drehzahl des mindestens einen rotierenden Zerkleinerungswerkzeugs n größer 500 U/min beträgt.

Wenn nur mindestens ein Feinzerkleinerer vorgesehen ist, und das Füllgut der Förderpumpe bedarfsgerecht zugeführt wird ist es vorteilhaft, wenn Füllgutstücke mit einem maximalen Durchmesser von 20 mm verwendet werden. Somit ist sichergestellt, dass mit ausschließlich einem Feinzerkleinerer das Feinbrät bzw. die Emulsion hergestellt werden kann, ohne dass es zu große Druckverluste gibt oder der Feinzerkleinerer verstopft.

Es ist auch möglich, dass hinter der letzten Zerkleinerungsstufe eine zusätzliche Förderpumpe, z. B. in Form einer Flügelzellenpumpe oder Schneckenpumpe vorgesehen ist, die das Feinbrät bzw. die Emulsion in die Füll- bzw. Portioniereinrichtung z.B. das Füllrohr schiebt. Dies hat den Vorteil, dass bei zu großen Druckverlusten, insbesondere bei mehreren Zerkleinerungsstufen, eine exakte Portionierung des Füllguts in eine Wursthülle möglich ist. Dennoch ist eine kontinuierliche Produktion möglich, wobei das Füllgut während der Herstellung des Feinbräts und während des Abfüllens im geschlossenen System verweilt. Auch diese zusätzliche Förderpumpe kann von der gemeinsamen Steuerung 50 angesteuert werden.

Die Erfindung wird nachfolgend unter Bezugnahme der folgenden Zeichnungen näher erläutert.
- Fig. 1: ist ein Querschnitt durch eine Vorrichtung gemäß der vorliegenden Erfindung.
- Fig. 2: ist ein Querschnitt durch eine bevorzugte Ausführungsform einer Vorrichtung gemäß der vorliegenden Erfindung.
- Fig. 3: ist eine schematische Darstellung einer Vorrichtung gemäß der vorliegenden Erfindung.
- Fig. 4: zeigt ein Beispiel für einen Schneidsatz einer Zerkleinerungsstufe.
- Fig. 5: zeigt ein Ablaufdiagramm des erfindungsgemäßen Verfahrens.
- Fig. 6: zeigt schematisch die Gesamtansicht einer Vorrichtung zum Herstellen und Abfüllen von Feinbrät in eine Wursthülle gemäß der vorliegenden Erfindung.
- Fig. 7: zeigt eine weitere Ausführungsform gemäß der vorliegenden Erfindung.

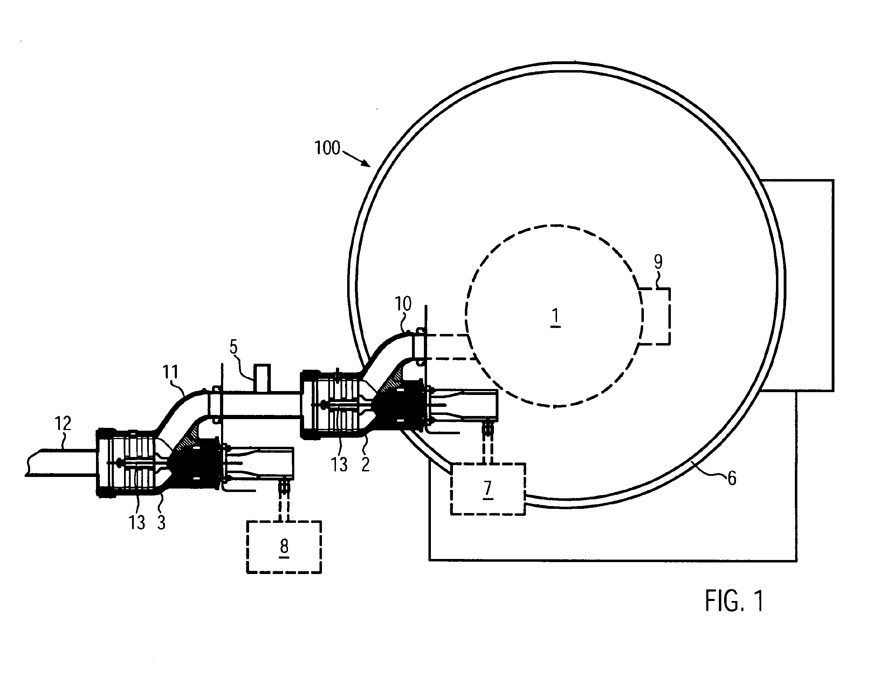

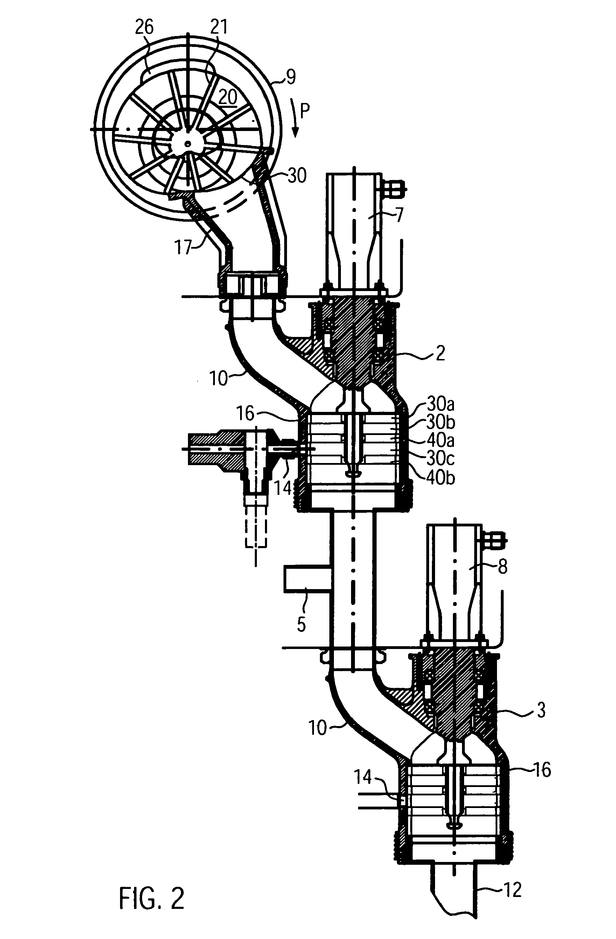

Fig. 1 zeigt schematisch eine Ausführungsform gemäß der vorliegenden Erfindung. Fig. 2 zeigt im Wesentlichen das gleiche Ausführungsbeispiel wobei einige Komponenten detaillierter dargestellt sind.

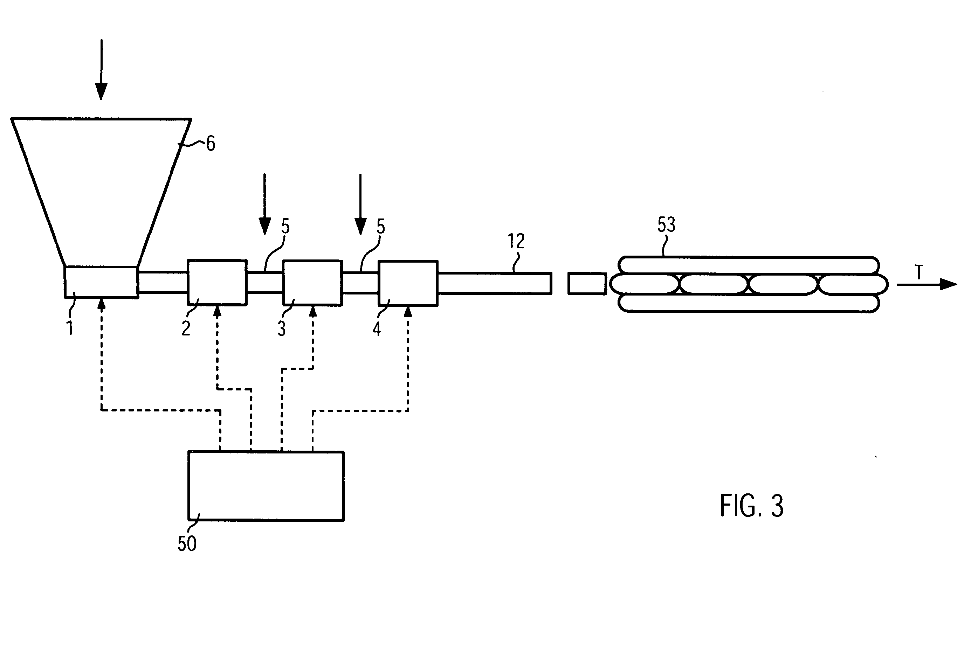

Die Vorrichtung 100 weist eine Zuführeinrichtung 6, hier in Form eines Fülltrichters für Füllgut auf. Als Füllgut kommen insbesondere Lebensmittelprodukte wie Fleisch, Speck, Salz und Zusatzstoffe in Frage. Die Größe und Zusammensetzung des Füllguts ist in der Regel standardisiert. Beim Einfüllen des Füllguts in den Fülltrichter 6 kann das Füllgut vorgemengt sein. Die in Fig. 2 und 3 gezeigte Ausführungsform eignet sich auch für größere Füllgutstücke mit einem Durchmesser > 20 mm. Im unteren Bereich des Fülltrichters 6 ist eine Förderpumpe 1 vorgesehen. Wie insbesondere aus Fig. 2 hervorgeht, kann eine solche Pumpe eine Flügelzellenpumpe 1 sein, die das Füllgut mit einer bestimmten Förderleistung über eine Zuleitung 10 zu einer ersten Zerkleinerungsstufe, hier einen Grobzerkleinerer 2, fördert. Die Förderpumpe 1 weist dabei einen eigenen Antriebsmotor 9 auf (siehe Fig. 1). Eine solche Flügelzellenpumpe ist bereits aus dem Stand der Technik bekannt (beispielsweise aus der EP 0 432 388 B2 und EP 1 040 758 A1) und wird daher nicht näher erläutert. Die Flügelzellenpumpe weist, wie insbesondere aus Fig. 2 hervorgeht, einen Einlass 26 für das Füllgut auf, sowie radial verschiebbare Flügel 21, die sich in Pfeilrichtung P drehen, wobei das Füllgut über die Zuführung 26 in die Kammern 20 der Flügelzellenpumpe 1 gelangt und in Richtung Pumpenauslass 30 der in der Stutzen 17 mündet, ausgestoßen wird. Somit wird das Füllgut in Richtung Grobzerkleinerer 2 geschoben. Der Grobzerkleinerer ist über die Leitung 10 fest mit der Förderpumpe verbunden und weist mehrere Zerkleinerungswerkzeuge 30a,b,c; 40a,b auf, von den zumindest eines rotiert.

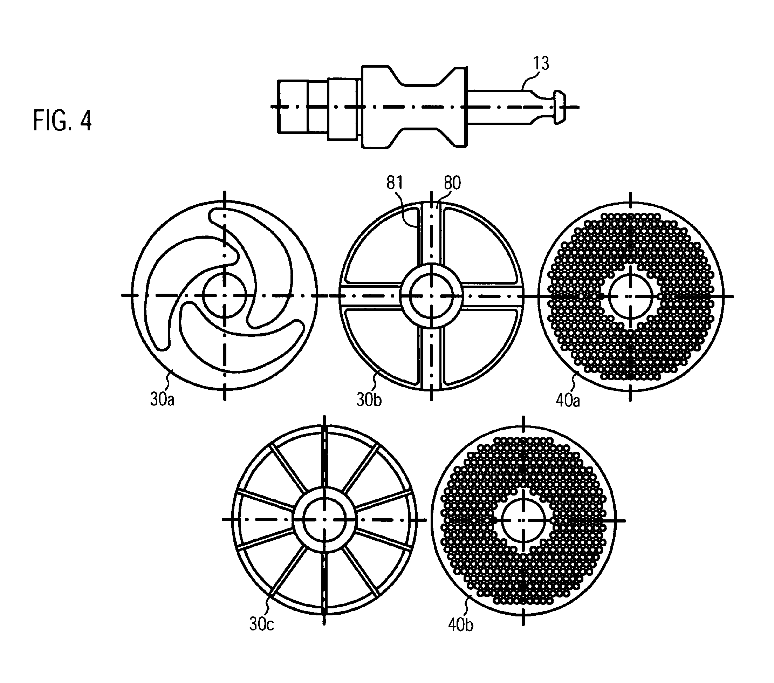

Fig. 4 zeigt ein Beispiel für einen entsprechenden Schneidsatz. Der Schneidsatz weist ein feststehendes Vorschneidemesser 30a auf, ein Hohlarmmesser 30b mit hohlen Messerarmen 81, das über die Welle 13 angetrieben werden kann, eine feststehende Lochscheibe 40a, ein weiteres über die Welle 13 antreibbares Schneidemesser 30c sowie eine Endlochscheibe 40b. Das Hohlarmmesser ist ein Sortiermesser und weist hier mehrere sich radial erstreckende Hohlräume 80 auf, die nach außen geöffnet sind und seitlich jeweils durch zwei Schneiden begrenzt sind. Die Hohlräume sind zur Lochscheibe 40a gerichtet. Bei dem Hohlarmsortiermesser 30b sammeln sich die Hartteile am Innendurchmesser und werden in Folge des Füllgutdrucks durch die Hohlarme nach außen geführt und können über eine Öffnung 14 im Gehäuse 16 des Zerkleinerers 2 abgeführt werden.

Zum Antrieb der Welle 13 ist ein extra Antriebsmotor 7 in Form eines Elektromotors vorgesehen. Der Motor 7 dreht die Welle 13 um die Achse A, wodurch die auf der Welle gelagerten Messer 30c, b um die Achse gedreht werden.

Der in Fig. 4 gezeigte Schneidsatz ist nur ein Beispiel. Es können verschiedene Zerkleinerungswerkzeuge verwendet werden, die nach den folgenden Zerkleinerungsprinzipien funktionieren: Messer - Lochscheibe, feste Lochscheibe - rotierende Lochscheibe, Rotor - Stator sowie eine Kombination dieser Zerkleinerungsprinzipien. Bei dem Rotor-Stator-System umfasst das Schneidsystem z. B. einen stationären Statorring, der einen rotierend angetriebenen Schneidrotor umgibt. Sowohl der Statorring als auch der Schneidrotor weisen in Richtung der Rotationsachse angeordnete Stollen auf. Solche nach dem Rotor-Stator-Prinzip arbeitende Schneidsätze sind beispielsweise in der EP 1 980 323 B1 beschrieben.

Vorteilhafterweise sind sie Schneidsätze in den einzelnen Zerkleinerungsstufen als Gesamteinheit oder teilweise austauschbar angeordnet. Ein Austausch eines Schneidsatzes kann auf einfache Weise erfolgen.

Wie insbesondere aus Fig. 1 und 2 hervorgeht, ist nach dem Grobzerkleinerer 2 eine Verbindungsleitung 11 vorgesehen, die zu einer weiteren Zerkleinerungsstufe hier dem Feinzerkleinerer 3 führt. In der Leitung 11 ist eine Zuführeinrichtung 5 für weitere Bestandteile, wie z. B. Wasser, Eiswasser oder sonstige Zusatzstoffe vorgesehen. Die Zuführungsleitung kann durch ein nicht dargestelltes Ventil geschlossen werden.

Die zweite Zerkleinerungsstufe ist ein Feinzerkleinerer 3 und weist ebenfalls mindestens ein rotierendes Zerkleinerungswerkzeug auf und ist ansonsten, wie im Zusammenhang mit dem Zerkleinerer 2 beschrieben wurde, aufgebaut. In diesem Ausführungsbeispiel weist der Feinzerkleinerer einen separaten Antriebsmotor 8 auf. Der Schneidsatz für den Feinzerkleinerer 3 wird so ausgewählt, dass ein gewünschter Zerkleinerungsgrad erzielt werden kann. Bei dem in Fig. 1 gezeigten Ausführungsbeispiel weist die Vorrichtung zwei Zerkleinerungsstufen auf, wonach das fertige Feinbrät bzw. die Emulsion abgefüllt werden kann. Die Emulsion bzw. das Feinbrät wird in diesem Fall durch eine an den Feinzerkleinerer 3 angrenzendes Füll- bzw. Portioniereinrichtung 12 ausgestoßen. Die Füll- oder Portioniereinrichtung kann ausschließlich aus einem Füllrohr gebildet sein oder aber noch weitere Komponenten, wie beispielsweise eine Abdreheinheit z.B. ein Abdrehgetriebe zum Drehen des Füllrohrs oder eine Clip-Einrichtung zum Setzten eines eine gefüllte Wurst unterteilenden Clips, umfassen, wie nachfolgend noch näher erläutert wird.

Die Förderpumpe 1, der Grobzerkleinerer 2 und mindestens ein weiterer Feinzerkleinerer 3 sind also fest über die Verrohrungen 10, 11 verbunden. Auch die Füll- bzw. Portioniereinrichtung 12, hier als Füllrohr 12, schließt sich direkt an den Feinzerkleinerer 3 an so dass sich ein geschlossenes System ergibt.

Ferner kann die Vorrichtung eine nicht dargestellte Kühlung aufweisen, die das Füllgut in der Vorrichtung zumindest abschnittsweise kühlt, insbesondere in einem Bereich der Zerkleinerungsstufen und/oder der Verbindungsleitungen 11. Die Kühlung kann beispielsweise in Form eines Wärmetauschers ausgebildet sein und außen an der Vorrichtung angeordnet werden.

Auch wenn in den Fig. 1 und 2 nur zwei Zerkleinerungsstufen gezeigt sind, können auch mehrere Zerkleinerungsstufen vorgesehen sein.

Es ist vorteilhaft, wenn sowohl die Zerkleinerungsstufen, d. h. die Zerkleinerer, ihren jeweils eigenen Antriebsmotor 7, 8 aufweisen und auch die Füllpumpe 1 ihren eigenen Antriebsmotor 9 aufweist, derart, dass die Zerkleinerungswerkzeuge unabhängig voneinander antreibbar sind. Somit können die Drehzahlen variiert werden und auf optimale Werte eingestellt werden.

Vorteilhafterweise werden, wie insbesondere aus Fig. 3 hervorgeht, die Antriebe der unterschiedlichen Zerkleinerungsstufen (in diesem Ausführungsbeispiel drei), hier mit 2, 3 und 4 bezeichnet, von einer gemeinsamen zentralen Steuerung 50 der Vorrichtung aus gesteuert. Die zentrale Steuerung 50 kann auch weitere Elemente der Vorrichtung ansteuern, wie z. B. Abdrehgetriebe bzw. Antrieb 52 oder Clip-Einrichtung (nicht dargestellt), Kühlung etc. Die Vorrichtung kann eine Bedienerschnittstelle aufweisen, über die die Drehzahlen n der rotierenden Werkzeuge für die unterschiedlichen Zerkleinerungsstufen sowie die Förderleistung der Förderpumpe eingegeben werden können.

Es ist auch möglich, nicht für jede Zerkleinerungsstufe und die Füllpumpe einen eigenen Antriebsmotor vorzusehen, sondern bestimmte Antriebe miteinander zu koppeln. Möglich ist beispielsweise bei den in Fig. 1 und 2 gezeigten Ausführungsformen eine Kopplung der Antriebe der Förderpumpe 1, sowie des Grobzerkleinerers 2 oder eine Koppelung der Förderpumpe 1 mit dem Grobzerkleinerer 2 und dem Feinzerkleinerer 3 oder aber eine Kopplung der Antriebe für die Zerkleinerer 2, 3. Gibt es mehr als zwei Zerkleinerungsstufen können auch die weiteren Antriebe mit dem Antrieb der Förderpumpe und/oder allen oder einzelnen Antrieben der restlichen Zerkleinerer gekoppelt werden. Dann ergibt sich ein fest eingestelltes Drehzahlverhältnis. Die Drehzahlen müssen dann aber aufeinander abgestimmt werden. Eine optimale Produktionseinstellung ist dann nur möglich, wenn die Zusammensetzung der Schneidsatzteile der unterschiedlichen Zerkleinerungsstufen einander angepasst werden.

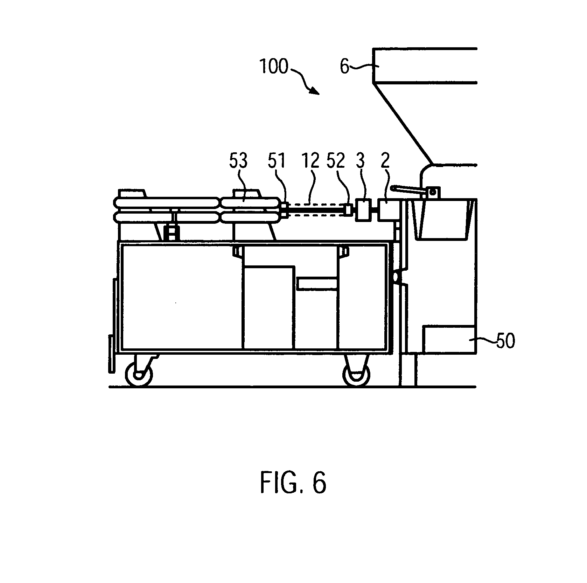

Das Feinbrät bzw. die Emulsion wird über Füll- bzw. Portioniereinrichtung 12 in bekannter Weise, beispielsweise in eine Wursthülle, abgefüllt. Dazu kann, wie aus Fig. 6 hervorgeht das Füllrohr 12 in bekannter Weise eine Darmbremse 51 aufweisen, über die eine über dem Füllrohr 12 geraffte Wursthülle geführt und gespannt werden kann. Durch Ausstoßen des Füllgutes kann die Wursthülle so in Transportrichtung T vom Füllrohr 12 gezogen werden. Mit 52 ist ein Abdrehgetriebe bezeichnet, zur Bildung einer Abdrehstelle zwischen einzelnen Würsten. Das bedeutet, dass das Füllrohr 12 zusammen mit der Darmbremse 51 um die Längsachse drehbar ist und durch Gegenhalten der Wurst über eine Transporteinrichtung 53 eine Abdrehstelle erzeugt werden kann. Die Transporteinrichtung ist hier aus gegenüberliegenden umlaufenden Transportmitteln, hier gegenüberliegenden umlaufenden Endlosbändern gebildet.

Die Würste können jedoch auch nicht durch Abdrehen, sondern beispielsweise durch Verdrängen der pastösen Masse in der Wursthülle unter Setzen eines Clips unterteilt werden.

Es ist auch möglich, dass nach der letzten Zerkleinerungsstufe, in den Fig. 1 und 2 der Feinzerkleinerer 3, eine weitere Fördereinrichtung (nicht dargestellt), z. B. in Form einer weiteren Flügelzellenpumpe oder aber einer Förderschnecke, angeordnet ist, die das Feinbrät bzw. die Emulsion in die Füll- bzw. Portioniereinrichtung fördert, d. h. in das Füllrohr 12. Somit kann sichergestellt werden, dass das Füllgut konstant und portionsgenau aus dem Füllrohr 12 ausgeschoben wird, selbst wenn es zu hohen Druckverlusten in den einzelnen Zerkleinerungsstufen kommt.

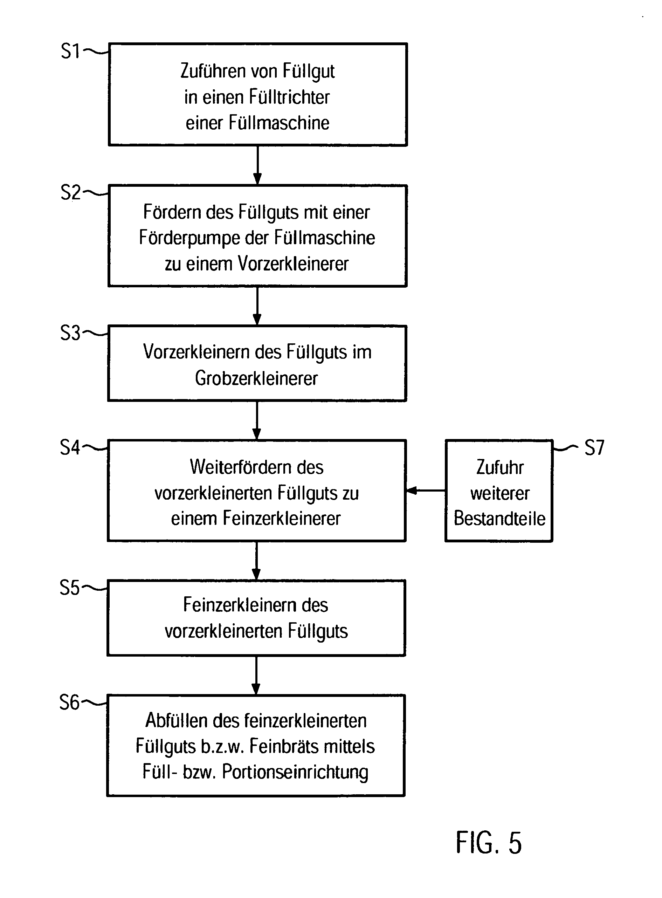

Nachfolgend wird in Zusammenhang mit der Fig. 5 das Verfahren näher erläutert.

Zunächst wird Füllgut bedarfsgerecht in den Fülltrichter 6 der Vorrichtung, hier also der Füllmaschine, zugeführt.(S1)

Das Füllgut wird über die Förderpumpe 1, hier die Flügelzellenpumpe, unter Druck in die Leitung 10 geschoben.(S2) Die Leistung der Füllpumpe bzw. die Zuführung des Füllgutes erfolgt mengenbedarfsgerecht und ist einstellbar. Das heißt, es wird für eine konstante Produktzuführung, d. h. einem konstantem Füllgutstrom, zur ersten Zerkleinerungsstufe gesorgt. Die Pumpe kann kontinuierlich arbeiten, beispielsweise wenn die Abteilstellen im abgefüllten Wurststrang durch Abdrehen erzeugt werden. Werden die Abteilstellen durch Setzen eines Clips erzeugt, so arbeitet die Förderpumpe intermittierend.

In der ersten Zerkleinerungsstufe 2 wird das Füllgut im Grobzerkleinerer 2 grob zerkleinert.(S3) Durch Wahl der Zerkleinerungswerkzeuge 30, 40 und durch die Drehzahl der rotierenden Zerkleinerungswerkzeuge bzw. Messer 30c, b kann ein bestimmter gewünschter Zerkleinerungsgrad eingestellt werden. Die Drehzahl im Grobzerkleinerer 3 ist zur Erzeugung des grob zerkleinerten Füllguts ≤ 500 U/min. Die rotierenden Zerkleinerungswerkzeuge 30, 40 werden dabei von dem Antriebsmotor 7 angetrieben. Der Antriebsmotor 7 wird ebenso wie der Antrieb 9 der Förderpumpe 1 von der zentralen Steuerung 50 geregelt.

Nach der Grobzerkleinerung wird das Füllgut über die Leitung 11 weiter zum Feinzerkleinerer 3 geschoben(S4). In der Leitung 11 wird dann gegebenenfalls noch über die Zuführung 5 ein Zusatz, wie z. B. Wasser oder Eiswasser, zugeführt (S7).

In dem Feinzerkleinerer 3 erfolgt dann eine Feinzerkleinerung, so dass Feinbrät oder eine Emulsion hergestellt wird (S5). Auch der Antriebsmotor 8 wird über die zentrale Steuerung 50 angesteuert. Zur Feinzerkleinerung ist die Drehzahl des Zerkleinerungswerkzeugs im Feinzerkleinerer n > 500 U/min, kann aber auch > 2000 U/min betragen.

Das Feinbrät wird dann über Füll- bzw. Portioniereinrichtung 12 abgefüllt und insbesondere, wie zuvor beschrieben, in eine Wursthülle geschoben (S6).

Die Drehzahl des mindestens einen rotierenden Zerkleinerungswerkzeugs 30b, 30c kann in Abhängigkeit von mindestens einem der folgenden Parameter eingestellt werden: Förderleistung der Förderpumpe 1, Art des Produkts, gewünschter Zerkleinerungsgrad, Art des Zerkleinerungswerkzeugs. Das bedeutet, je höher die Förderleistung der Förderpumpe ist, desto höher ist auch die Drehzahl des Zerkleinerungswerkzeugs. Mit steigendem Zerkleinerungsgrad steigt auch die Drehzahl des Zerkleinerungswerkzeugs.

In den Zerkleinerungsstufen können Hartteile über die jeweilige Ableitung 15 ausgeleitet werden. Eine zusätzliche externe Kühlung des Füllguts ist zumindest abschnittsweise möglich.

Das Verfahren wurde in Zusammenhang mit zwei Zerkleinerungsstufen erläutert, es können jedoch auch mehrere Zerkleinerungsstufen zwischen Förderpumpe und Füll- bzw. Portioniereinrichtung vorgesehen sein.

Es ist auch möglich nur eine Zerkleinerungsstufe anzutreiben.

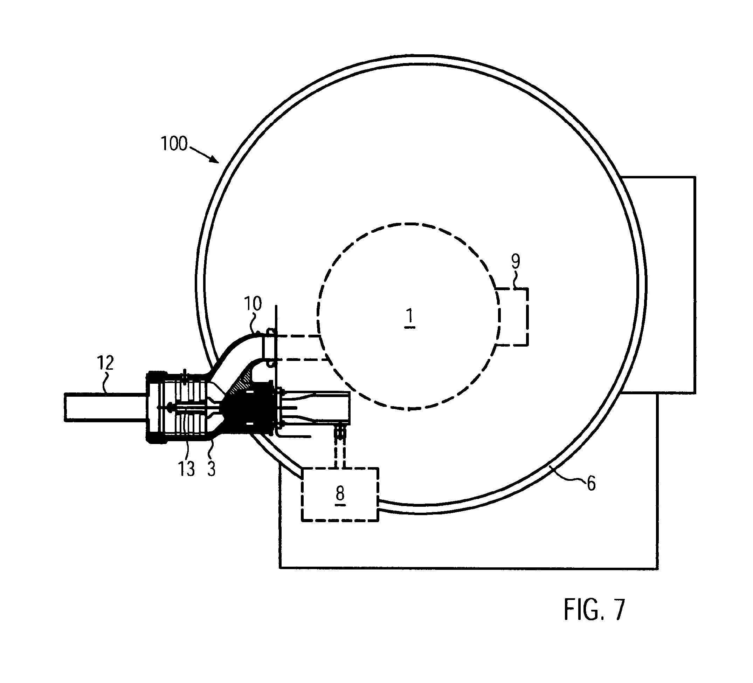

Fig. 7 zeigt ein weiteres Ausführungsbeispiel gemäß der vorliegenden Erfindung. Dieses Ausführungsbeispiel entspricht im Wesentlichen dem im Zusammenhang mit den vorherigen Figuren gezeigten Ausführungsbeispiel, so dass auf eine Wiederholung der entsprechenden Merkmale verzichtet wird. Der Unterschied zwischen dieser Ausführungsform und dem vorherigen Ausführungsbeispiel ist, dass hier nur ein Feinzerkleinerer der Förderpumpe 1 nachgeschaltet ist und zwischen Feinzerkleinerer und Zuförderpumpe 1 kein Grobzerkleinerer 2 angeordnet ist. Stattdessen mündet die Zuführleitung 10 direkt in den nachgeschalteten Feinzerkleinerer 3. Wenn auch nicht dargestellt, könnte dem Feinzerkleinerer 3 in Transportrichtung des Füllguts auch noch mindestens ein weiterer Feinzerkleinerer nachgeschaltet sein, bevor die Anordnung in einer Füll- bzw. Portioniereinrichtung 12, hier in Form eines Füllrohrs 12, mündet. Wie auch bei den vorherigen Ausführungsbeispielen kann die Füll- bzw. Portioniereinrichtung hier ausschließlich aus einem Füllrohr 12 gebildet sein oder aber zusätzlich, wie in Zusammenhang mit Fig. 6 erläutert, eine Abdreheinrichtung 52 oder aber eine nicht dargestellte Clip-Einrichtung aufweisen. Auch wenn nicht dargestellt, ist vorzugsweise auf dem Füllrohr 12 wieder eine Darmbremse angeordnet. Der Feinzerkleinerer 3 wird durch die Steuerung 50 derart angetrieben, dass er Feinbrät bzw. eine Emulsion erzeugt, wobei die Drehzahl n auf jeden Fall > 500 U/min beträgt. Auch hier weisen der Feinzerkleinerer 3 und die Förderpumpe 1 unterschiedliche Antriebe 8, 9 auf. Dadurch, dass die Antriebe nicht gekoppelt sind, kann der Feinzerkleinerer 3 mit hoher Drehzahl betrieben werden, um das Feinbrät bzw. die Emulsion zu erzeugen.

Das Betriebsverfahren des in Fig. 7 gezeigten Ausführungsbeispiels entspricht im Wesentlichen dem Verfahren, wie es im Zusammenhang mit Fig. 5 erläutert wurde, nur dass die Schritte S2, S3 und S6 wegfallen. Das Füllgut wird der Füllmaschine bedarfsgerecht zugeführt. So kann ein kontinuierlicher Füllgutstrom erzeugt werden. Das Füllgut weist dabei bereits vorgefertigte Füllgutstückchen, hier Fleischstückchen, auf, die einen maximalen Durchmesser von etwa 20 mm, insbesondere etwa 15 mm, aufweisen. Die Förderleistung der Förderpumpe 1 ist einstellbar, so dass die Förderpumpe einen konstanten Füllgutstrom transportiert, so dass eine exakte Portionsgenauigkeit der hergestellten Würste erzielt werden kann. Im Feinzerkleinerer 3 wird das Füllgut feinzerkleinert und dann über die Füll- bzw. Portioniereinrichtung ausgestoßen, um das erzeugte Feinbrät bzw. die Emulsion abzufüllen.

Die Vorrichtung 100 ist in allen Ausführungsbeispielen als geschlossenes System ausgebildet. Die Vorrichtung kann in Form eines Vakuumfüllers ausgebildet werden, so dass bereits in der Füllpumpe ein Vakuum angesetzt werden kann. Vorteilhafterweise ist die Gesamtvorrichtung druckdicht ausgebildet. Somit kann der Eintrag von Sauerstoff in das Füllgut verhindert werden. Es ergibt sich eine verbesserte Hygiene im Gesamtprozess durch kurze Verarbeitungszeiten und keine Verweildauer des offenen Füllguts im Verarbeitungsbetrieb. Eine kontinuierliche Brätherstellung ist möglich. Die Energiekosten können wesentlich reduziert werden. Insgesamt können die Produktionskosten gesenkt werden.

## Patentansprüche

1. Vorrichtung (100) zum Herstellen und Abfüllen von Feinbrät, insbesondere einer Emulsion mit
einer Zuführeinrichtung (6) für Füllgut,
einer Förderpumpe (1) zum Fördern des Füllguts in Form eines einstellbaren und konstanten Füllgutstroms,
mindestens einen nachgeschalteten Feinzerkleinerer (3, 4), sowie
einer dem Feinzerkleinerer (3, 4) nachgeschalteten Füll- bzw. Portioniereinrichtung (12), insbesondere einem Füllrohr, zum Abfüllen des erzeugten Feinbräts bzw. der Emulsion, wobei
nach der Förderpumpe (1) ein Grobzerkleinerer (2) zum Zerkleinern des über die Förderpumpe (1) zugeführten Füllguts angeordnet wird, dem der mindestens eine Feinzerkleinerer (3, 4) nachgeschaltet ist, **dadurch gekennzeichnet dass** die Förderpumpe (1), der Grobzerkleinerer (3) und der mindestens eine nachgeschaltete Feinzerkleinerer (3, 4) jeweils einen eigenen Antriebsmotor (9, 8, 7) aufweisen.

2. Vorrichtung nach Anspruch 1, **dadurch gekennzeichnet, dass** der Grobzerkleinerer und/oder der Feinzerkleinerer jeweils mehrere Zerkleinerungswerkzeuge (30a, b, c; 40a, b) aufweist, von denen zumindest jeweils eines (30b, c) rotiert und die Drehzahlen einstellbar sind.

3. Vorrichtung nach mindestens Anspruch 2, **dadurch gekennzeichnet, dass** die Vorrichtung (100) eine Steuereinrichtung (50) aufweist, die einen Antrieb (7) des mindestens einen Zerkleinerungswerkzeugs des Feinzerkleinerers (3,4) so ansteuern kann, dass die Drehzahl n > 500 U/min beträgt.

4. Vorrichtung nach Anspruch 2, **dadurch gekennzeichnet, dass** die Vorrichtung eine zentrale Steuerung (50) aufweist, die einen Antrieb (9, 8, 7) der Förderpumpe (1), des Grobzerkleinerers (2) und des mindestens eines Feinzerkleinerers (3) regelt.

5. Vorrichtung nach mindestens einem der Ansprüche 2-4, **dadurch gekennzeichnet, dass** zwischen dem Grobzerkleinerer (2) und dem nachgeschalteten Feinzerkleinerer (3) eine Zuführeinrichtung (5) zum Zuführen von Zusatzstoffen vorgesehen ist, und/oder zwischen dem Feinzerkleinerer (3) und einem weiteren Feinzerkleinerer (4) eine entsprechende Zuführeinrichtung (5) angeordnet ist.

6. Vorrichtung nach mindestens einem der Ansprüche 1-5, **dadurch gekennzeichnet, dass** die Vorrichtung eine Kühlung aufweist, die das Füllgut in der Vorrichtung zumindest abschnittsweise kühlt, insbesondere in einem Bereich des Grob- und/oder Feinzerkleinerers (2, 3) und/oder den Verbindungsleitungen (11).

7. Vorrichtung nach mindestens einem der Ansprüche 1-6, **dadurch gekennzeichnet, dass** die Förderpumpe (1), der mindestens eine Feinzerkleinerer und die Füll- bzw. Portioniereinrichtung oder die Förderpumpe (1), der Grobzerkleinerer (3), mindestens ein Feinzerkleinerer (3, 4) und die Füll- bzw. Portioniereinrichtung (12) über eine Verrohrung fest oder lösbar miteinander verbunden sind, derart, dass ein geschlossenes System entsteht.

8. Vorrichtung nach mindestens einem der Ansprüche 1-7, **dadurch gekennzeichnet, dass** die Zerkleinerungswerkzeuge (30a, b, c; 40a, b) in den Zerkleinerern insbesondere als austauschbarer Schneidsatz angeordnet sind.

9. Verfahren zum kontinuierlichen Herstellen und Abfüllen von Feinbrät, insbesondere einer Emulsion mit einer Vorrichtung nach mindestens einem der Ansprüche 1-10, wobei
a) Füllgut einer Förderpumpe (1) zugeführt wird,
b) das Füllgut zu einem nachgeschalteten Feinzerkleinerer (2) weitergeleitet wird,
c) das Füllgut in dem Feinzerkleinerer (2) feinzerkleinert wird und
d) das erzeugte Feinbrät bzw. die Emulsion über eine nachgeschaltete Füll- bzw.
Portioniereinrichtung (12), insbesondere ein Füllrohr (12), abgefüllt wird, dass vor Schritt b) das Füll gut in einer ersten Zerkleinerungsstufe aus der Förderpumpe (1) in einem Schritt a') einem Grobzerkleinerer (2) zugeführt wird und im Grobzerkleinerer (2) vorzerkleinert wird, bevor es in Schritt c) in einer zweiten Zerkleinerungsstufe feinzerkleinert wird und die Förderpumpe (1), der Grobzerkleinerer (3) und der nachgeschaltete Feinzerkleinerer (3, 4) durch jeweils einen eigenen Antriebsmotor (9, 8, 7) angetrieben werden.

10. Verfahren nach Anspruch 9, **dadurch gekennzeichnet, dass** nach Schritt c) das Füllgut zumindest einer weiteren Zerkleinerungsstufe (4) zugeführt und zerkleinert wird, bevor es abgefüllt wird.

11. Verfahren nach mindestens einem der Ansprüche 9-10, **dadurch gekennzeichnet, dass** zwischen der ersten und zweiten Zerkleinerungsstufe und/oder zwischen weiteren Zerkleinerungsstufen dem Füllgut ein Zusatz, insbesondere Wasser oder Eiswasser zugeführt wird.

12. Verfahren nach mindestens einem der Ansprüche 9-11, **dadurch gekennzeichnet, dass** die Drehzahl des mindestens einen rotierenden Zerkleinerungswerkzeugs (30a, b) einer Zerkleinerungsstufe in Abhängigkeit von mindestens einem der folgenden Parameter eingestellt wird: Förderleistung der Förderpumpe, Art des Produkts, Zerkleinerungsgrad, Art des Zerkleinerungswerkzeugs, und/oder dass die Drehzahlen der Antriebe der Förderpumpe (1) und der rotierenden Zerkleinerungswerkzeuge (30a, b) in den unterschiedlichen Zerkleinerungsstufen von einer zentralen Steuerung (50) gesteuert werden.

13. Verfahren nach mindestens einem der Ansprüche 9-12, **dadurch gekennzeichnet, dass** die Drehzahl des mindestens einen rotierenden Zerkleinerungswerkzeugs (30a, b) in der ersten Zerkleinerungsstufe kleiner ist als in der nachfolgenden oder den nachfolgenden Zerkleinerungsstufen und insbesondere n ≤ 500 U/min beträgt, während die Drehzahlen in der oder den nachfolgenden Stufen insbesondere n > 500 U/min betragen und/oder
dass die Drehzahl n des mindestens einen rotierenden Zerkleinerungswerkzeugs des mindestens einen Feinzerkleinerers (3) n > 500 U/min beträgt.

14. Verfahren nach mindestens einem der Ansprüche 9-13, **dadurch gekennzeichnet, dass** das Füllgut den Zerkleinerungsstufen unter Druck zugeführt wird.

15. Verfahren nach mindestens einem der Ansprüche 9-14, **dadurch gekennzeichnet, dass** hinter der letzten Zerkleinerungsstufe (3,4) eine zusätzliche Förderpumpe vorgesehen ist, die das Feinbrät bzw. die Emulsion in die Füll- bzw. Portioniereinrichtung schiebt.

## Claims

1. Device (100) for manufacturing and stuffing fine sausage meat, in particular an emulsion, comprising a feed means (6) for the product, a feed pump (1) for transporting the product in the form of an adjustable and constant flow of product, at least one downstream fine mincer (3, 4), and a stuffing and/or portioning means (12) arranged downstream of the fine mincer (3, 4), in particular a stuffing tube, for stuffing the produced fine sausage meat or the emulsion, a coarse mincer (2) being arranged downstream of the feed pump (1) for mincing the product supplied by the feed pump (1), which is followed by the at least one fine mincer (3, 4), **characterised in that** the feed pump (1), the coarse mincer (3) and the at least one downstream fine mincer (3, 4) each have their own drive motor (9, 8, 7).

2. Device according to claim 1, **characterised in that** the coarse mincer and/or the fine mincer comprises a plurality of mincing tools (30a, b, c; 40a, b) in each case, of which at least one (30b, c) rotates respectively and the speeds can be adjusted.

3. Device according to at least claim 2, **characterised in that** the device (100) comprises a control means (50) which can control a drive (7) of the at least one mincing tool of the fine mincer (3, 4) such that the speed n is > 500 rpm.

4. Device according to claim 2, **characterised in that** the device comprises a central control unit (50) which controls a drive (9, 8, 7) of the feed pump (1), of the coarse mincer (2) and of the at least one fine mincer (3).

5. Device according to at least one of claims 2 to 4, **characterised in that** between the coarse mincer (2) and the downstream fine mincer (3), a feed means (5) for feeding additives is provided, and/or between the fine mincer (3) and a further fine mincer (4), a corresponding feed means (5) is arranged.

6. Device according to at least one of claims 1 to 5, **characterised in that** the device has a cooling system which cools the product in the device at least in portions, in particular in a region of the coarse and/or fine mincer (2, 3) and/or the connection lines (11).

7. Device according to at least one of claims 1 to 6, **characterised in that** the feed pump (1), the at least one fine mincer and the stuffing and/or portioning means or the feed pump (1), the coarse mincer (3), at least one fine mincer (3, 4) and the stuffing and/or portioning means (12) are interconnected rigidly or releasably via a piping such that a closed system is formed.

8. Device according to at least one of claims 1 to 7, **characterised in that** the mincing tools (30a, b, c; 40a, b) in the mincers are in particular arranged as an exchangeable set of cutters.

9. Method for continuously manufacturing and stuffing fine sausage meat, in particular an emulsion, using a device according to at least one of claims 1 to 10, wherein
a) the product is supplied to a feed pump (1),
b) the product is forwarded to a downstream fine mincer (2),
c) the product is finely minced in the fine mincer (2), and
d) the produced fine sausage meat or the emulsion is stuffed via a downstream stuffing and/or portioning means (12), in particular a stuffing tube (12), before step b), the product being supplied, in a first mincing stage, from the feed pump (1) in a step a') to a coarse mincer (2) and is pre-minced in the coarse mincer (2) before it is finely minced in step c) in a second mincing stage, and the feed pump (1), the coarse mincer (3) and the downstream fine mincer (3, 4) each being driven by their own drive motor (9, 8, 7).

10. Method according to claim 9, **characterised in that** after step c), the product is supplied to at least one further mincing stage (4) and minced before it is stuffed.

11. Method according to at least one of claims 9 to 10, **characterized in that** between the first and the second mincing stage and/or between further mincing stages, an additive is added to the product, in particular water or ice water.

12. Method according to at least one of claims 9 to 11, **characterised in that** the speed of the at least one rotating mincing tool (30a, b) of a mincing stage is adjusted depending on at least one of the following parameters: discharge of the feed pump, type of product, degree of mincing, type of mincing tool, and/or **in that** the speeds of the drives of the feed pump (1) and the rotating mincing tools (30a, b) in the different mincing stages are controlled by a central control unit (50).

13. Method according to at least one of claims 9 to 12, **characterised in that** the speed of the at least one rotating mincing tool (30a, b) is less in the first mincing stage than in the subsequent mincing stage or stages, and is in particular n ≤ 500 rpm, while the speeds in the subsequent mincing stage or stages are in particular n > 500 rpm and/or **in that** the speed n of the at least one rotating mincing tool of the at least one fine mincer (3) is n > 500 rpm.

14. Method according to at least one of claims 9 to 13, **characterised in that** the product is supplied to the mincing stages under pressure.

15. Method according to at least one of claims 9 to 14, **characterised in that** downstream of the final mincing stage (3, 4), an additional feed pump is provided which pushes the fine sausage meat or the emulsion into the stuffing and/or portioning means.

## Revendications

1. Dispositif (100) destiné à la préparation et au remplissage de chair à saucisse finement hachée, en particulier d'une émulsion, comprenant
un dispositif d'arrivée (6) pour un produit de remplissage, une pompe d'alimentation (1) pour refouler le produit de remplissage sous forme d'un flux de produit de remplissage réglable et constant,
au moins un broyeur fin (3, 4) monté en aval, ainsi
qu'un dispositif de mise en portions ou de remplissage (12), en particulier un tube de remplissage, monté en aval du broyeur fin (3, 4), pour le remplissage de la chair à saucisse finement hachée ou de l'émulsion produite,
un broyeur grossier (2) pour le broyage du produit de remplissage alimenté par l'intermédiaire de la pompe d'alimentation (1) étant disposé en aval de la pompe (1), broyeur en aval duquel est monté ledit au moins un broyeur fin (3, 4), **caractérisé en ce que** la pompe d'alimentation (1), le broyeur grossier (3), et ledit au moins un broyeur fin (3, 4) monté en aval, présentent respectivement un moteur de commande propre (9, 8, 7).

2. Dispositif selon la revendication 1, **caractérisé en ce que** le broyeur grossier et/ou le broyeur fin présentent chacun plusieurs outils de broyage (30a, b, c ; 40a, b), dont l'un au moins (30b, c) est rotatif et dont les vitesses de rotation sont réglables.

3. Dispositif selon au moins la revendication 2, **caractérisé en ce que** le dispositif (100) présente une unité de commande (50), qui peut commander un entraînement (7) dudit au moins un outil de broyage du broyeur fin (3, 4) de sorte que la vitesse de rotation n > 500 t/min.

4. Dispositif selon la revendication 2, **caractérisé en ce que** le dispositif présente une commande centrale (50), qui règle un entraînement (9, 8, 7) de la pompe d'alimentation (1), du broyeur grossier (2) et dudit au moins un broyeur fin (3).

5. Dispositif selon l'une au moins des revendications 2 - 4, **caractérisé en ce qu'**un dispositif d'alimentation (5) pour l'arrivée d'additifs est prévu entre le broyeur grossier (2) et le broyeur fin (3) monté en aval, et/ou un dispositif d'alimentation (5) correspondant est disposé entre le broyeur fin (3) et un autre broyeur fin (4).

6. Dispositif selon l'une au moins des revendications 1 - 5, **caractérisé en ce que** le dispositif présente un refroidissement, qui refroidit au moins par sections le produit de remplissage dans le dispositif, en particulier dans une zone du broyeur grossier et/ou du broyeur fin (2, 3) et/ou dans les conduites de raccordement (11).

7. Dispositif selon l'une au moins des revendications 1 - 6, **caractérisé en ce que** la pompe d'alimentation (1), ledit au moins un broyeur fin et le dispositif de mise en portions ou de remplissage, ou la pompe d'alimentation (1), le broyeur grossier (3), au moins un broyeur fin (3, 4) et le dispositif de mise en portions ou de remplissage (12), sont assemblés entre eux fixement ou de façon amovible par l'intermédiaire d'une tuyauterie, de telle sorte qu'il en résulte un système fermé.

8. Dispositif selon l'une au moins des revendications 1 - 7, **caractérisé en ce que** les outils de broyage (30a, b, c ; 40a, b) sont disposés dans les broyeurs en particulier sous forme de jeu de coupe interchangeable.

9. Procédé destiné à la préparation et au remplissage en continu de chair à saucisse finement hachée, en particulier d'une émulsion, comprenant un dispositif selon l'une au moins des revendications 1 - 10, dans lequel
a) un produit de remplissage arrive par une pompe d'alimentation (1),
b) le produit de remplissage est transporté en direction d'un broyeur fin (2) monté en aval,
c) le produit de remplissage est haché dans le broyeur fin (2) et
d) la chair à saucisse finement hachée produite ou l'émulsion est remplie par l'intermédiaire d'un dispositif de mise en portions ou de remplissage aval (12), en particulier un tube de remplissage (12), que avant l'étape b), le produit de remplissage est envoyé dans une étape a'), dans un premier étage de broyage, à partir de la pompe d'alimentation (1) dans un broyeur grossier (2) et est soumis à un broyage préliminaire dans le broyeur grossier (2), avant d'être broyé fin dans l'étape c) dans un deuxième étage de broyage, et la pompe d'alimentation (1), le broyeur grossier (3) et le broyeur fin (3, 4) monté en aval, sont respectivement entraînés par un moteur de commande propre (9, 8, 7).

10. Procédé selon la revendication 9, **caractérisé en ce que**, après l'étape c), le produit de remplissage est envoyé et broyé dans au moins un autre étage de broyage (4), avant d'être rempli.

11. Procédé selon l'une au moins des revendications 9 - 10, **caractérisé en ce que**, entre le premier et le deuxième étage de broyage et/ou entre des étages de broyage supplémentaires, un additif, en particulier de l'eau ou de l'eau glacée, est ajouté au produit de remplissage.

12. Procédé selon l'une au moins des revendications 9 - 11, **caractérisé en ce que** la vitesse de rotation dudit au moins un outil de broyage rotatif (30a, b) d'un étage de broyage est réglée en fonction d'au moins l'un des paramètres suivants : débit de la pompe d'alimentation, nature du produit, degré de broyage, type de l'outil de broyage, et/ou que les vitesses de rotation des entraînements de la pompe d'alimentation (1) et des outils de broyage rotatifs (30a, b) dans les différents étages de broyage sont contrôlées par une commande centrale (50).

13. Procédé selon l'une au moins des revendications 9 - 12, **caractérisé en ce que** la vitesse de rotation dudit au moins un outil de broyage rotatif (30a, b) dans le premier étage de broyage est inférieure à la vitesse dans l'étage de broyage suivant ou dans les étages de broyage suivants et est en particulier égale à n ≤ 500 t/min, tandis que les vitesses de rotation dans l'étage ou dans les étages suivants sont en particulier égales à n > 500 t/min et/ou
que la vitesse de rotation n dudit au moins un outil de broyage rotatif dudit au moins un broyeur fin (3) est égale à n > 500 t/min.

14. Procédé selon l'une au moins des revendications 9 - 13, **caractérisé en ce que** le produit de remplissage est envoyé sous pression dans les étages de broyage.

15. Procédé selon l'une au moins des revendications 9 - 14, **caractérisé en ce qu'**une pompe d'alimentation supplémentaire est prévue en arrière du dernier étage de broyage (3, 4), laquelle pompe pousse la chair à saucisse finement hachée ou l'émulsion dans le dispositif de remplissage ou de mise en portions.
